# EUROPÄISCHE PATENTSCHRIFT

(11) **EP 2 042 276 B1**
(45) Veröffentlichungstag und Bekanntmachung des Hinweises auf die Patenterteilung: **16.11.2011**
(21) Anmeldenummer: 08162955.2
(22) Anmeldetag: 26.08.2008
(51) Int. Cl.: B25J 13/08, G01P 15/18, G01G 19/08, A01B 63/10

(54) **Landwirtschaftliche Maschine und Verfahren zur Positionsbestimmung**
Agricultural vehicle and method for calculating the position
Machine agricole et procédé de détermination de position

(30) Priorität: 26.09.2007 DE 102007045846
(43) Veröffentlichungstag der Anmeldung: 01.04.2009
(73) Patentinhaber: Deere & Company, Moline, IL 61265-8098 (US)
(72) Erfinder: Peters, Ole, 25724 Neuenkoogsdeich (DE)
(74) Vertreter: Holst, Sönke

(56) Entgegenhaltungen:
- WO-A-2007/112718
- DE-A1- 4 328 144
- DE-A1- 19 901 563
- US-A- 4 878 543

## Beschreibung

Die Erfindung betrifft eine landwirtschaftliche Maschine, umfassend ein Fahrzeug, eine mit dem Fahrzeug verbindbare und motorisch betätigbare Hubvorrichtung, an welche ein zu bewegendes Anbaugerät koppelbar ist, und eine Einrichtung zur Bestimmung der Position der an das Fahrzeug gekoppelten Hubvorrichtung und/oder des an die Hubvorrichtung gekoppelten Anbaugerätes, wobei die Einrichtung eine elektronische Steuereinheit umfasst, welche mit Sensoren zur Positionsbestimmung der Hubvorrichtung und/oder des Anbaugerätes verbunden ist, wobei die Sensoren als Beschleunigungssensoren ausgebildet sind, wobei wenigstens ein erster Beschleunigungssensor an der Hubvorrichtung und/oder am Anbaugerät und wenigstens ein als Beschleunigungssensor ausgebildeter Referenzsensor am Fahrzeug positioniert ist und wobei von der elektronischen Steuereinheit ein Positionssignal für die Hubvorrichtung und/oder für das Anbaugerät durch eine Relativmessung der Signale des wenigstens ersten Beschleunigungssensors zu den Signalen des Referenzsensors generierbar ist. Ferner wird ein entsprechendes Verfahren zur Positionsbestimmung vorgeschlagen.

Es sind Vorrichtungen bekannt, die zur Positionsbestimmung von an ein Fahrzeug gekoppelte Hubvorrichtungen oder Hebevorrichtungen bzw. zur Positionsbestimmung von an die Hubvorrichtungen gekoppelte Anbaugeräte oder Werkzeuge dienen. Derartige Hubvorrichtungen werden üblicherweise motorisch betätigt, beispielsweise durch Hydraulikzylinder, die sich zwischen einem Bewegungsgestänge und einem Befestigungsrahmen des Fahrzeugs erstrecken. Bekannt sind beispielsweise Frontlader, deren Bewegungsgestänge durch ein Schwingenpaar ausgebildet ist, welches schwenkbar an einer mit dem Rahmen eines landwirtschaftlichen Schleppers verbundenen Konsole gekoppelt ist. Das Bewegungsgestänge eines Frontladers ist an seinem freien Ende mit einem Arbeitswerkzeug, beispielsweise mit einer Schaufel oder mit einer Gabel koppelbar. Es ist ferner bekannt, derartige Frontlader mit Sensoren zu versehen, um die Position der Hubvorrichtung oder eines Arbeitswerkzeugs bzw. Anbaugerätes zu bestimmen. Aus den ermittelten Positionen der Hubvorrichtung bzw. der Anbaugeräte können verschiedene Steueralgorithmen zur Automatisierung des Frontladerbetriebs abgeleitet werden, beispielsweise zur Parallelführung des Anbaugerätes oder um eine einstellbare Referenzposition wiederholbar bzw. reproduzierbar anzufahren (siehe hierzu: "Optimierungsmöglichkeiten für Frontladerarbeiten", 58 Landtechnik 1/2003, Seite 26/27; "Integrierbare Positions- und Geschwindigkeitssensoren für die Mobilhydraulik", 59 Landtechnik 4/2004, Seite 206/207; "Strategien für den automatisierten Frontladerbetrieb", 59 Landtechnik 6/2004, Seite 322 ff.; "Bedienungs- und Steuerungsstrategien für automatisierte Frontladerarbeiten", 60 Landtechnik 4/2005, Seite 230 ff.). Diesbezügliche Ansätze beschränken sich auf die Verwendung von Wegsensoren, Geschwindigkeitssensoren, Neigungssensoren, Kontaktsensoren oder auf die Durchführung von Potentiometermessungen, magnetoresistiver Längenmessung in Hydraulikzylindern, "open loop control"-Ansätzen (Kennfeldmessung von Ventilen mit Referenzierung) sowie I/O-Regelungen mit Endschaltern oder Hallsensoren. Die Nachteile derartiger, bekannter Ansätze liegen darin, dass die genannten Sensoren bzw. Sensorik oftmals aufgrund ihrer Anordnung am Fahrzeug systembedingt Beschädigungen ausgesetzt, unverhältnismäßig kostenintensiv oder noch nicht ausgereift sind, insbesondere in Bezug auf die Genauigkeit und Empfindlichkeit einiger Sensoren bzw. Sensoriken. So sind oftmals bewegliche Teile in den Sensoren bzw. in der Sensorik sowie die Sensoren bzw. die Sensorik selbst, aufgrund ihrer ungünstigen Anordnung am Fahrzeug bzw. an der Hubvorrichtung, nur mit großem Aufwand zu schützen.

Die DE 199 00 587 A1 offenbart eine Vorrichtung zur Messung der Position und Winkel von Gelenkgliedern eines Bewegungssystems, wobei die Vorrichtung den Einsatz von Beschleunigungssensoren vorsieht, deren Signale in einem Iterationsverfahren zur Berechnung von Lasten und Schwerpunktverlagerungen an den Gelenkgliedern bzw. an dem gesamten Bewegungssystem herangezogen werden, wobei nach erfolgter Iteration die Winkel und Positionen der einzelnen Glieder des Bewegungssystems gegenüber der Vertikalen berechenbar sind. Die Vorrichtung eignet sich insbesondere für Baumaschinen und Forstmaschinen, wobei auf eine detaillierte Anwendung des Systems auf derartige Maschinen nicht eingegangen wird. Nachteilig wirkt sich aus, dass das offenbarte System auf der Durchführung von Iterationsschritten basiert und somit einen hohen und komplexen Rechenaufwand fordert und zudem ungenau ist und sich lediglich auf Größenangaben in Bezug auf die Vertikale bezieht.

Die DE 199 01 563 A1 offenbart eine Anordnung zum Wiegen von Nutzlasten an einem Fahrzeug, wobei winklig zueinander angeordnete Neigungssensoren in Form von Beschleunigungssensoren eingesetzt werden.
Die Beschleunigungssensoren sind derart angeordnet, dass sie ein Vertikalbeschleunigungssignal liefern, welches zur Korrektur eines zur Wiegemessung herangezogenen Drucksignals eines Drucksensors genutzt wird. Durch das von den Beschleunigungssensoren gelieferte Korrektursignal, werden auf das Fahrzeug wirkende Neigungseinflüsse, die eine Verfälschung der Wiegemessung verursachen können, kompensiert. Die Anordnung und Ausbildung der Sensoren erlaubt eine Auswertung und Berücksichtigung der Richtung der Beschleunigung. Eine darüber hinaus gehende Auswertung und Berücksichtigung von Signalen, die neben der Korrektur von Wiegesignalen noch weitere Anwendungen ermöglicht, wird nicht offenbart.

Die der Erfindung zugrunde liegende Aufgabe wird darin gesehen, eine landwirtschaftliche Maschine der eingangs genannten Art und ein Verfahren für eine solche anzugeben, durch welches die vorgenannten Probleme überwunden werden.

Die Aufgabe wird erfindungsgemäß durch die Lehre der Patentanspruchs 1 und 12 gelöst. Weitere vorteilhafte Ausgestaltungen und Weiterbildungen der Erfindung gehen aus den Unteransprüchen hervor.

Erfindungsgemäß wird eine landwirtschaftliche Maschine der eingangs genannten Art derart ausgebildet, dass der Steuereinheit ein vom Referenzsensor gelieferter Referenzbeschleunigungsvektor und ein vom wenigstens ersten Beschleunigungssensor gelieferter Positionsbeschleunigungsvektor zuführbar sind und zur Bestimmung des Positionssignals in Relation gesetzt werden. Mit der Positionierung des Referenzsensors am Fahrzeug ist gemeint, dass der Referenzsensor fahrzeugseitig, also an einer beliebigen Stelle am Fahrzeug außerhalb der Hubvorrichtung bzw. des Anbaugeräts positioniert sein kann, beispielsweise am gesamten Fahrzeugrumpf, an der Karosserie oder am Fahrzeugrahmen, sowie am Antriebsstrang oder an den Antriebsachsen etc.. Dadurch, dass ein als Beschleunigungssensor ausgebildeter Referenzsensor am Fahrzeug und wenigstens ein Beschleunigungssensor an der Hubvorrichtung bzw. am Anbaugerät vorgesehen ist, kann eine relative Winkelmessung in einer auswählbaren Bezugsebene des Fahrzeugs (x-z oder y-z Ebene) realisiert werden. Die Beschleunigungssensoren weisen vorzugsweise zwei Messachsen auf und rendern die Richtung des auf sie wirkenden Beschleunigungsvektors bzw. geben diese an. Denkbar ist auch der Einsatz von Beschleunigungssensoren mit drei Messachsen oder der Einsatz mehrerer Beschleunigungssensoren mit nur einer Messachse. Generell wird zum einen die Erdbeschleunigung und zum anderen die Fahrzeugbeschleunigung berücksichtigt. Aus dem Richtungsunterschied des Vektors des wenigstens einen Beschleunigungssensors an der Hubvorrichtung bzw. am Anbaugerät zum Vektor des Referenzsensor am Fahrzeug lässt sich die Position der Hubvorrichtung bzw. des Anbaugeräts bestimmen. Dabei können auch mehrere Referenzsensoren am Fahrzeug vorgesehen sein, um die Positionsbestimmung zu optimieren, so dass beispielsweise Bodenunebenheiten oder Neigungsstellungen des Fahrzeugs kompensierbar sind. Bei der erfindungsgemäßen Ausbildung einer landwirtschaftlichen Maschine ist von Vorteil, dass keine beweglichen Teile in der Sensorik vorgesehen werden müssen und die Beschleunigungssensoren an geschützten Stellen positionierbar sind. Ferner sind kostengünstige Beschleunigungssensoren einsetzbar, die bereits aus der Robotik und Automation bekannt sind und sich bewährt haben. Sie weisen zudem eine hohe Empfindlichkeit und Genauigkeit auf. Ferner erlaubt die erfindungsgemäße Ausbildung einer landwirtschaftlichen Maschine bzw. die vorgesehene Anordnung der Beschleunigungssensoren allgemeine Automatisierungsstrategien für das Fahrzeug, z.B. eine elektronische Nachführung der Hubvorrichtung oder des Anbaugeräts, eine Lageregelung von Hubvorrichtung bzw. Anbaugerät oder auch eine Programmierung von Positionen, die automatisiert angefahren werden können. So kann beispielsweise bei einem landwirtschaftlichen Schlepper, der mit einem Frontlader bestückt ist, eine am Frontlader angekoppelte Schaufel nachgeführt werden, so dass diese stets horizontal zur Bodenoberfläche geführt wird, wodurch Lageschwankungen der Schaufel bei Bodenunebenheiten oder bei Federungsbewegungen des Fahrzeugs kompensiert werden können. Die Beschleunigungssensoren können als mikro-elektromechanische Beschleunigungsaufnehmer bzw. mikromechanische Beschleunigungsmesser ausgebildet sein. Ferner ist jedoch auch der Einsatz von andersartigen Beschleunigungssensoren, beispielsweise piezoelektrischen oder magnetinduktiven Beschleunigungssensoren denkbar.

Zur Referenzmessung kann ferner ein zusätzlicher Referenzsensor in Form eines Gyroskops oder Drehratensensors vorgesehen sein, der auf dem Fahrzeug positioniert ist, um die Referenzmessung zu verbessern bzw. um eine Fehlerkorrektur vorzunehmen. So können beispielsweise sich aufgrund der unterschiedlichen Positionierung von Beschleunigungsmessern und Referenzsensor einschleichende Fehler genauer kompensiert werden. Ein 3-achsiges Gyroskop mit integriertem Beschleunigungsaufnehmer kann beispielsweise alle 6 Freiheitsgrade eines Fahrzeugs als Referenz messen. Dies hat den Vorteil, dass die auf den Anbaugeräten positionierten Beschleunigungssensoren dann eine Positionserkennung zulassen, bei der alle translatorischen und rotatorischen Fehler kompensierbar sind.

In einer bevorzugten Ausgestaltung der Erfindung ist wenigstens ein zweiter Beschleunigungssensor an der Hubvorrichtung und/oder am Anbaugerät positioniert, so dass wenigstens zwei oder mehr Beschleunigungssensoren vorgesehen sind, die in Referenz zu dem Referenzsensor am Fahrzeug gesetzt bzw. geschaltet sind. Auf diese Weise kann die Position sowohl der Hubvorrichtung als auch des Anbaugeräts sowie weiterer mit Beschleunigungssensoren versehener Komponenten am Fahrzeug unabhängig voneinander sensorisch bestimmt und angesteuert werden.

In einer bevorzugten Ausgestaltung der Erfindung ist die Hubvorrichtung als Frontlader und das Anbaugerät als Frontladerwerkzeug, beispielsweise als Schaufel, Greifer oder Gabel ausgebildet. So können über die Beschleunigungssensoren, die am Frontlader und am Frontladerwerkzeug positioniert sind, unabhängig voneinander die Positionen des Frontladers und des Frontladerwerkzeugs bestimmt und durch entsprechende Ausbildung der elektrischen Steuereinheit und durch Implementierung entsprechender Steueralgorithmen gezielt angesteuert bzw. manipuliert werden. So kann beispielsweise eine Steuerung der Position des Frontladers in Abhängigkeit von vorgebbaren Bedienungsschritten erfolgen, so dass beispielsweise beim Heben des Auslegers automatisch eine vorgebbare erste Position und beim Senken automatisch eine vorgebbare zweite Position angefahren wird.

Vorzugsweise umfasst der Frontlader eine Werkzeugaufnahme, an die das Anbaugerät bzw. das Frontladerwerkzeug koppelbar ist, wobei der wenigstens eine oder der zweite Beschleunigungssensor an der Werkzeugaufnahme positioniert ist. So kann beispielsweise eine Schwinge des Frontladers mit einem Beschleunigungssensor versehen sein, um die Position des Hubwerks zu erfassen bzw. zu regeln bzw. anzusteuern und ein weiterer Beschleunigungssensor an der Werkzeugaufnahme vorgesehen sein, mit dem die Position des Werkzeugs erfasst wird. Dadurch kann ein und derselbe Beschleunigungssensor, nämlich der an der Werkzeugaufnahme positionierte Sensor, zur Bestimmung der Position eines beliebigen an die Werkzeugaufnahme gekoppelten Werkzeugs verwendet werden. Somit kann vermieden werden, dass ein jedes Werkzeug mit einem eigenen Beschleunigungssensor versehen sein muss.
In einer weiteren bevorzugten Ausgestaltung der Erfindung ist die Hubvorrichtung als Anhängevorrichtung, insbesondere Dreipunktanhängevorrichtung, und das Anbaugerät als an die Anhängevorrichtung koppelbares Anhängegerät ausgebildet ist. So kann beispielsweise die Position eines beliebigen an eine Dreipunktanhängevorrichtung gekoppelten Anhänge- oder Arbeitsgeräts ermittelt und elektronisch gesteuert werden. Hierbei kann es sich beispielsweise um ein Bodenbearbeitungsgerät oder eine Anhängefeldspritze handeln.

In einer weiteren bevorzugten Ausgestaltung der Erfindung ist die Hubvorrichtung als Anbaugestänge für einen Erntevorsatz und das Anbaugerät als Erntevorsatz ausgebildet ist. Beispielsweise kann ein Mähvorsatz, ein Erntegutaufnehmer, ein Schneidwerk, eine Haspel oder dergleichen an ein Anbaugestänge am Fahrzeug gekoppelt sein, wobei eine Positionierung des Anbaugerätes in einem bestimmten vorgebbaren Abstand zum Boden steuerbar ist.

In einer weiteren bevorzugten Ausgestaltung der Erfindung ist das Fahrzeug als landwirtschaftlicher Schlepper ausgebildet, wobei der Schlepper sowohl über eine Hubvorrichtung an seiner Vorderseite, beispielsweise einen Frontlader, oder auch an seiner Hinterseite, beispielsweise eine Dreipunktanhängevorrichtung, verfügen kann.

In einer weiteren bevorzugten Ausgestaltung der Erfindung ist das Fahrzeug als selbstfahrende Erntemaschine ausgebildet, beispielsweise als Mähdrescher, der mit einer Haspel oder einem Erntevorsatz an einer Hubvorrichtung bzw. an einem Anbaugestänge versehen ist, oder als Feldhäcksler, der mit einer Erntegutaufnahme (Pickup, Maisgebiss etc.) an einer Hubvorrichtung bzw. an einem Anbaugestänge versehen ist, wobei hier die Position des Anbaugestänges bzw. der Haspel bzw. des Erntevorsatzes oder der Erntegutaufnahme elektronisch steuerbar ist.

In einer weiteren bevorzugten Ausgestaltung der Erfindung ist das Fahrzeug als selbstfahrende landwirtschaftliche Feldspritze ausgebildet, wobei die Hubvorrichtung als Parallelogrammgestänge und das Anbaugerät als Spritzgestänge ausgebildet ist, wobei hier die Position des Spritzgestänges zum Boden elektronisch steuerbar ist.

In einer weiteren bevorzugten Ausgestaltung der Erfindung ist das Fahrzeug als Baumaschine, insbesondere als Radladerfahrzeug ausgebildet ist, wobei die Hubvorrichtung als Ladevorrichtung und das Anbaugerät als Schaufel ausgebildet ist. Hierbei kann beispielsweise ein Nachführen der Schaufel realisiert werden, so dass bei Bagger- und Transportarbeiten unabhängig von der Bodenstruktur und der Lage der Baumaschine ein paralleles Führen der Schaufel zur Bodenoberfläche gewährleistet wird bzw. Änderungen der Baumaschinenlage (bei Bodenunebenheiten oder bei Federbewegungen) kompensierbar sind, so dass dadurch verursachte Schwenkwinkeländerungen der Schaufel und ein damit verbundenes Verlieren an Schüttgut vermieden werden.

In einer weiteren bevorzugten Ausgestaltung der Erfindung ist das Fahrzeug als Teleskopladerfahrzeug ausgebildet, wobei die Hubvorrichtung als Teleskopausleger ausgebildet ist, an dem ein Arbeitsgerät über eine Werkzeugaufnahme koppelbar ist. Hierbei kann beispielsweise ein Nachführen des Anbaugerätes realisiert werden, so dass bei Lader- und Transportarbeiten unabhängig von der Bodenstruktur und der Lage der Baumaschine ein paralleles Führen des Anbaugeräts zur Bodenoberfläche gewährleistet wird bzw. Änderungen der Baumaschinenlage (bei Bodenunebenheiten oder bei Federbewegungen) kompensierbar sind, so dass dadurch verursachte Schwenkwinkeländerungen des Anbaugerätes vermieden werden. Ferner kann beispielsweise auch eine Steuerung der Position des Teleskopauslegers in Abhängigkeit von der Teleskopauslegerlänge erfolgen, oder eine automatisierte Positionsfolge für den Teleskopausleger in Abhängigkeit von vorgebbaren Bedienungsschritten erfolgen, so dass beispielsweise beim Heben des Auslegers eine vorgebbare erste Position und beim Senken eine vorgebbare zweite Position angefahren wird.

Ein erfindungsgemäßes Verfahren zur Positionsbestimmung einer an ein landwirtschaftliches Fahrzeug koppelbaren Hubvorrichtung und/oder eines an die Hubvorrichtung koppelbaren Anbaugerätes sieht vor, dass an dem Fahrzeug ein als Beschleunigungssensor ausgebildeter Referenzsensor und an der Hubvorrichtung und/oder an dem Anbaugerät wenigstens ein Beschleunigungssensor positioniert wird und von einer elektronischen Steuereinheit ein Positionssignal für die Hubvorrichtung und/oder für das Anbaugerät durch eine Relativmessung der Signale des wenigstens ersten Beschleunigungssensors zu den Signalen des Referenzsensors generiert wird. Dadurch, dass ein als Beschleunigungssensor ausgebildeter Referenzsensor am Fahrzeug und wenigstens ein Beschleunigungssensor an der Hubvorrichtung bzw. am Anbaugerät vorgesehen ist, wird eine relative Winkelmessung in einer auswählbaren Bezugsebene des Fahrzeugs (x-z oder y-z Ebene) realisiert. Die Beschleunigungssensoren weisen vorzugsweise zwei Messachsen auf und rendern die Richtung des auf sie wirkenden Beschleunigungsvektors bzw. geben diese an. Der Einsatz von Beschleunigungssensoren mit drei Messachsen oder der Einsatz mehrerer Beschleunigungssensoren mit nur einer Messachse ist ebenfalls denkbar. Generell wird zum einen die Erdbeschleunigung und zum anderen die Fahrzeugbeschleunigung berücksichtigt bzw. gemessen und verwertet. Aus dem Richtungsunterschied des Vektors des wenigstens einen Beschleunigungssensors an der Hubvorrichtung bzw. am Anbaugerät zum Vektor des Referenzsensor am Fahrzeug wird die Position der Hubvorrichtung bzw. des Anbaugeräts bestimmt. Dabei können auch mehrere Referenzsensoren am Fahrzeug vorgesehen sein, um die Positionsbestimmung zu optimieren, so dass beispielsweise Bodenunebenheiten oder Neigungsstellungen des Fahrzeugs kompensierbar sind. Ferner erlaubt das erfindungsgemäße Verfahren weitere allgemeine Automatisierungsstrategien für das Fahrzeug, z.B. eine elektronische Nachführung der Hubvorrichtung oder des Anbaugeräts, eine Lageregelung von Hubvorrichtung bzw. Anbaugerät oder auch eine Programmierung von Positionen, die automatisiert angefahren werden können. So kann beispielsweise bei einem landwirtschaftlichen Schlepper, der mit einem Frontlader bestückt ist, eine am Frontlader angekoppelte Schaufel nachgeführt werden, so dass diese stets horizontal zur Bodenoberfläche geführt wird, wodurch Lageschwankungen der Schaufel bei Bodenunebenheiten oder bei Federungsbewegungen des Fahrzeugs kompensiert werden können.

Vorzugsweise verwendet das Verfahren Beschleunigungssensoren, die als mikro-elektro-mechanische Beschleunigungsaufnehmer bzw. mikromechanische Beschleunigungsmesser ausgebildet sind. Ferner ist jedoch auch der Einsatz von andersartigen Beschleunigungssensoren, beispielsweise piezoelektrischen oder magnetinduktiven Beschleunigungssensoren denkbar.

Vorzugsweise verwendet das Verfahren einen zusätzlichen Referenzsensor in Form eines Gyroskops oder Drehratensensor, der auf dem Fahrzeug positioniert ist und mit dem bei der Generierung des Positionssignals eine Fehlerkorrekturmessung durchgeführt wird.

In einer bevorzugten Ausgestaltung der Erfindung verwendet das Verfahren einen zweiten Beschleunigungssensor, der an der Hubvorrichtung und/oder am Anbaugerät positioniert ist, so dass wenigstens zwei oder mehr Beschleunigungssensoren vorgesehen sind, die in Referenz zu dem Referenzsensor am Fahrzeug gesetzt bzw. geschaltet sind. Auf diese Weise kann die Position sowohl der Hubvorrichtung als auch des Anbaugeräts sowie weiterer mit Beschleunigungssensoren versehener Komponenten am Fahrzeug unabhängig voneinander sensorisch bestimmt und angesteuert werden.

Das Verfahren sieht ferner vor, dass die Position der Hubvorrichtung in Abhängigkeit von dem Positionssignal und in Abhängigkeit von einer vorgebbaren Position für die Hubvorrichtung von der elektronischen Steuereinheit ansteuerbar ist. Ein entsprechender Steueralgorithmus ist in der elektrischen Steuerung implementiert, so dass die elektronische Steuerung entsprechende Steuersignale für die das Hubgestänge betätigenden Komponenten, beispielsweise ein über ein elektronisches Steuerventil gesteuerter Hydraulikzylinder, generiert. Die gewünschte Position bzw. gewünschte Positionsfolgen kann bzw. können beispielsweise über ein elektronisches Eingabemodul vorprogrammiert oder über eine Einstelltaste oder einen Einstellhebel bzw. Einstellknopf (oder über ein anderes Einstellmittel) eingegeben werden.

Das Verfahren sieht weiterhin vor, dass die Position des Anbaugeräts in Abhängigkeit von dem Positionssignal und in Abhängigkeit von einer vorgebbaren Position für das Anbaugerät, insbesondere in Abhängigkeit von einer horizontalen Position, von der elektronischen Steuereinheit ansteuerbar ist. Ein entsprechender Steueralgorithmus ist auch hierfür in der elektrischen Steuerung implementiert, so dass die elektronische Steuerung entsprechende Steuersignale für die das Anbaugerät betätigenden Komponenten, beispielsweise ein über ein elektronisches Steuerventil gesteuerter Hydraulikzylinder, generiert. Die gewünschte Position kann beispielsweise über ein elektronisches Eingabemodul vorprogrammiert oder über eine Einstelltaste oder einen Einstellhebel bzw. Einstellknopf (oder über ein anderes Einstellmittel) eingegeben werden.

Anhand der Zeichnung, die mehrere Ausführungsbeispiele der Erfindung zeigen, werden nachfolgend die Erfindung sowie weitere Vorteile und vorteilhafte Weiterbildungen und Ausgestaltungen der Erfindung näher beschrieben und erläutert.

### Es zeigt:

- Fig. 1: eine schematische Seitenansicht einer erfindungsgemäßen landwirtschaftlichen Maschine am Beispiel eines Schleppers mit Frontlader und Werkzeug,
- Fig. 2: ein schematisches hydraulisch-elektronisches Schaltdiagramm der landwirtschaftlichen Maschine aus Figur 1,
- Fig. 3: eine schematische Seitenansicht einer erfindungsgemäßen landwirtschaftlichen Maschine am Beispiel eines Schleppers mit Dreipunktanhängevorrichtung und Bodenbearbeitungsgerät,
- Fig. 4: eine schematische Seitenansicht einer erfindungsgemäßen landwirtschaftlichen Maschine am Beispiel einer Erntemaschine mit Erntevorsatz,
- Fig. 5: eine schematische Seitenansicht einer erfindungsgemäßen landwirtschaftlichen Maschine am Beispiel einer Feldspritze mit Parallelogramm- und Spritzgestänge,
- Fig. 6: eine schematische Seitenansicht einer erfindungsgemäßen landwirtschaftlichen Maschine am Beispiel eines Radladers mit Schaufel und
- Fig. 7: eine schematische Seitenansicht einer erfindungsgemäßen landwirtschaftlichen Maschine am Beispiel eines Teleskopladers mit Gabel.

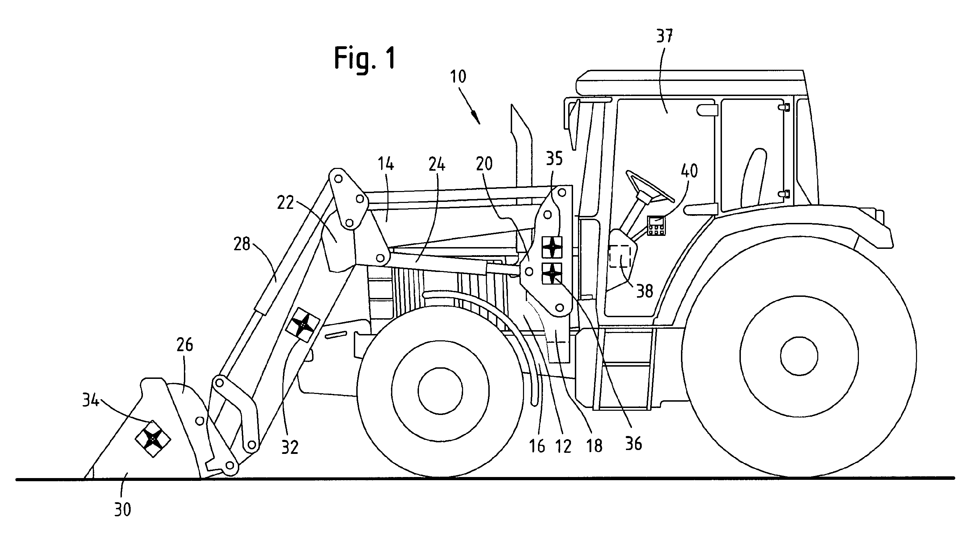

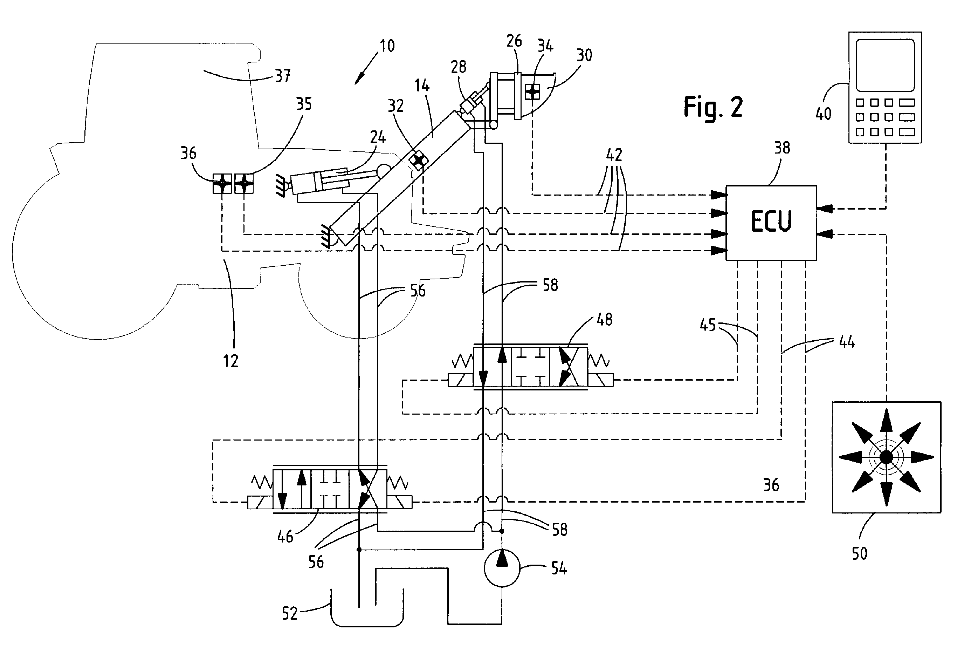

Figur 1 und 2 zeigen eine landwirtschaftliche Maschine 10 mit einem Fahrzeug in Form eines Schleppers 12 in Kombination mit einer Hubvorrichtung in Form eines Frontladers 14. Der Frontlader 14 ist über eine mit einem Rahmen 16 des Schleppers verbundene Konsole 18 und einem Verbindungsmast 20 an den Schlepper 12 gekoppelt. Der Frontlader 14 weist eine Schwinge 22 auf, die über Hydraulikzylinder 24 verschwenkbar an den Verbindungsmast 20 angelenkt ist. Am vorderen Ende der Schwinge 22 ist eine Werkzeugaufnahme 26 angeordnet, die über einen weiteren Hydraulikzylinder 28 verschwenkbar an die Schwinge 22 angelenkt ist. An die Werkzeugaufnahme 26 ist ein Anbaugerät bzw. Werkzeug in Form einer Laderschaufel 30 befestigt. Der Frontlader 14 ist im Bereich der Schwinge 22 mit einem ersten Beschleunigungssensor 32 versehen. Im Bereich der Laderschaufel 30 ist ein weiterer Beschleunigungssensor 34 vorgesehen. Ferner ist der Schlepper 12 mit einem Beschleunigungssensor versehen, der einen im Bereich der Konsole 18 (oder an einer beliebigen anderen Stelle am Schlepper 12) befestigten Referenzsensor 35 darstellt. Der im Bereich der Laderschaufel 30 positionierte Beschleunigungssensor 34 kann dabei ebenfalls direkt an der Werkzeugaufnahme 26 angeordnet sein, wodurch ein und derselbe Beschleunigungssensor 34 für die Positionsbestimmung verschiedener Werkzeuge nutzbar wäre. Exemplarisch ist in Figur 1 und 2 ein weiterer Referenzsensor 36 dargestellt, in Form eines Gyroskops oder Drehratensensors, der zur verbesserten Referenzmessung herangezogen werden kann und auf dem Fahrzeug bzw. Schlepper 12 positioniert ist. So können beispielsweise sich aufgrund der unterschiedlichen Positionierung von Beschleunigungsmessern 32, 34 und Referenzsensor 35, 36 einschleichende Fehler genauer kompensiert werden. Ein 3-achsiges Gyroskop mit integriertem Beschleunigungsaufnehmer kann beispielsweise alle 6 Freiheitsgrade eines Fahrzeugs als Referenz messen. Dies hat den Vorteil, dass die auf den Anbaugeräten positionierten Beschleunigungssensoren 32, 34 dann eine Positionserkennung zulassen, bei der alle translatorischen und rotatorischen Fehler kompensierbar sind. Ein derartiger zusätzlicher Referenzsensor 36 kann in allen der hier anhand der Figuren 1 bis 7 beschriebenen Ausführungsbeispiele eingesetzt werden.

Der Schlepper 12 umfasst ferner eine im Bereich der Kabine angeordnete elektronische Steuereinheit 38, die mit einem Eingabemodul 40 verbunden ist. Das Eingabemodul 40 ermöglicht einem Bediener die Eingabe von Steuer- bzw. Referenzdaten, die der elektronischen Steuereinheit 38 zugeführt werden können, bzw. in Abhängigkeit derer die Steuereinheit 38 programmierbare Steuerbefehle ausführt. Wie in Figur 2 dargestellt ist, ist die Steuereinheit 38 dazu entsprechend über elektronische Sensorleitungen 42 (siehe Figur 2) mit den Beschleunigungssensoren 32, 34, 35 bzw. Referenzsensor 36 und über elektronische Steuerleitungen 44, 45 mit ansteuerbaren hydraulischen Schaltventilen 46, 48 verbunden, über die ein Hydraulikfluss zum Betreiben der Hydraulikzylinder 24, 28 regelbar ist. Die Schaltventile 46, 48 sind dabei vorzugsweise als magnetinduktive Proportionalventile ausgebildet. Die elektronische Steuereinheit 38 ist ferner mit einem Bedienhebel 50 verbunden, beispielsweise einem Joystick, über welchen Steuersignale zum Ansteuern der hydraulischen Schaltventile 46, 48 durch einen Bediener ausgelöst werden können. Zur hydraulischen Versorgung der Hydraulikzylinder 24, 28 sind ein Hydraulikreservoir 52 sowie eine Hydraulikpumpe 54 vorgesehen, die jeweils über hydraulische Verbindungsleitungen 56, 58 sowie über die hydraulischen Schaltventile 46, 48 mit den Hydraulikzylindern 24, 28 verbunden sind.

Die Positionsbestimmung der Hubvorrichtung 14 bzw. des Anbaugeräts 30 erfolgt durch die vorhandene Sensorik (32, 34, 35, 36, 38) derart, dass von dem Referenzsensor 35 ein Referenzbeschleunigungsvektor erzeugt und der elektronischen Steuereinheit 38 zugeführt wird. Gleichzeitig erzeugen der auf der Hubvorrichtung (Frontlader) positionierte Beschleunigungssensor 32 und der auf dem Anbaugerät (Laderschaufel) positionierte Beschleunigungssensor 34 jeweils einen Positionsbeschleunigungsvektor, die ebenfalls der elektronischen Steuereinheit zugeführt werden. Die der Steuereinheit 38 zugeführten Vektoren werden entsprechend in Relation gesetzt, woraus eine relativ genaue Positionsbestimmung der Hubvorrichtung 14 bzw. des Anbaugerätes 30 in Relation zum Fahrzeug ermittelbar ist. Anhand der Signale eines gegebenenfalls vorgesehenen Referenzsensors 36 kann die Genauigkeit der Positionsbestimmung zusätzlich erhöht werden, wie bereits beschrieben. Damit ist der Grundstein für eine Ansteuerung der hydraulischen Steuerventile 46, 48 bzw. der Hydraulikzylinder 24, 28 durch die elektronische Steuereinheit 38 gelegt, wobei die elektronische Steuereinheit 38 von einer Bedienperson durch das Eingabemodul 40 mit entsprechenden Zielgrößen bzw. Steuergrößen versorgt werden kann. Dazu sind entsprechende Steueralgorithmen in der elektronischen Steuereinheit 38 hinterlegt. So kann beispielsweise die Eingabe für eine maximale Höhe des Anbaugerätes 30 erfolgen oder ebenso für eine minimale Höhe. Dadurch wird beispielsweise die Hubvorrichtung 14 beim hydraulischen Heben (durch Betätigung des Bedienhebels 50) automatisch (durch die elektronische Steuereinheit 38 gesteuert) auf die vorgegebene maximale Höhe angehoben. Entsprechend wird die Hubvorrichtung 14 beim hydraulischen Senken automatisch auf die minimale Höhe abgesenkt. Ein weiteres Beispiel bestände darin, eine bevorzugte Arbeitsposition für das Anbaugerät 30 vorzugeben, so dass beispielsweise die Schaufel 30 des Frontladers 14 in angehobener Position stets parallel zur Bodenoberfläche geführt wird, um beispielsweise beim Bewegen von Schüttgütern einen möglichst geringen Verlust an verschüttetem Schüttgut zu gewährleisten. Ein derartiger Verlust wird durch Positionsänderungen des Anbaugeräts 30 bei Fahrzeugpositionswechsel aufgrund Bremsen, Beschleunigen, Ein- bzw. Ausfedern oder auch beim Überfahren von Bodenunebenheiten ausgelöst. Durch einen entsprechenden in der elektronischen Steuereinheit 38 implementierten Steueralgorithmus können die von den Beschleunigungssensoren 32, 34, 35 gelieferten Beschleunigungsvektordaten herangezogen werden, um derartigen Fahrzeugpositionswechsel entgegenzuwirken und das Arbeitsgerät 30 in der von dem Bediener über das Eingabemodul 40 frei wählbaren Position zu halten. Bei dem hier beschriebenen Beispiel generiert die elektronische Steuereinheit 38 ein entsprechendes Steuersignal, welches dem zugeordneten hydraulischen Steuerventil 48 zur entsprechenden Ansteuerung bzw. Betätigung des Hydraulikzylinders 28 zugeführt wird.

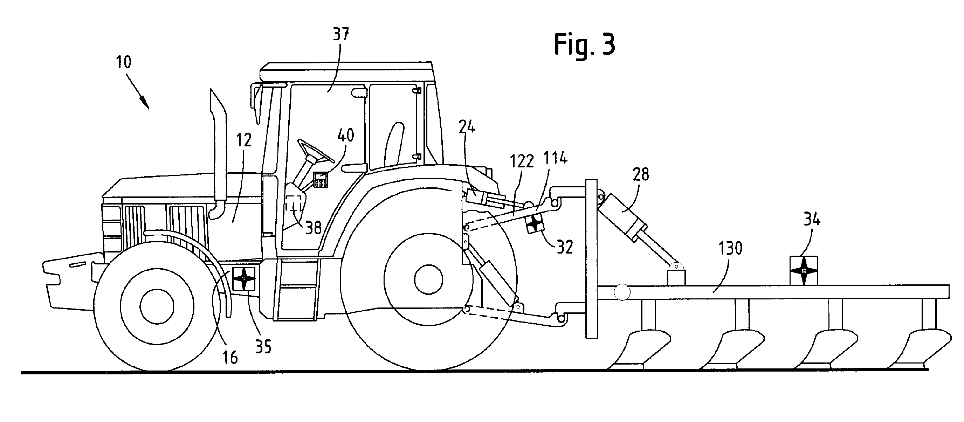

In den Figuren 3 bis 7 sind weitere erfindungsgemäße Ausführungsbeispiele gezeigt, wobei die anhand Figur 2 oben beschriebenen funktionalen Zusammenhänge entsprechend auf die in den Figuren 3 bis 7 dargestellten Ausführungsbeispiele anwendbar sind. Auf eine erneute funktionale Beschreibung der Positionsbestimmung für Hubvorrichtung und Anbaugerät wird somit verzichtet. Für gleichbedeutende funktionale Komponenten wurden daher in den Figuren 3 bis 7 dieselben Bezugszeichen gewählt.

So zeigt Figur 3 eine landwirtschaftliche Maschine 10 mit einem Fahrzeug in Form eines Schleppers 12 in Kombination mit einer Hubvorrichtung in Form einer Dreipunktanhängevorrichtung 114. Die Dreipunktanhängevorrichtung 114 ist über einen Montagerahmen (nicht gezeigt) heckseitig mit einem Rahmen 16 des Schleppers 12 verbunden. Die Dreipunktanhängevorrichtung 114 weist Lenker 122 auf, die über Hydraulikzylinder 24 verschwenkbar an den Montagerahmen angelenkt sind. Am hinteren Ende der Lenker 122 ist ein Anbaugerät in Form eines Bodenbearbeitungsgeräts 130 angeordnet, das über einen weiteren Hydraulikzylinder 28 verschwenkbar angelenkt ist. Die Dreipunktanhängevorrichtung 114 ist im Bereich der Lenker 122 mit einem ersten Beschleunigungssensor 32 versehen. Im Bereich des Bodenbearbeitungsgeräts 130 ist ein weiterer Beschleunigungssensor 34 vorgesehen. Ferner ist der Schlepper 12 mit einem Beschleunigungssensor versehen, der einen im Bereich des Rahmens 16 (oder an einer beliebigen anderen Stelle am Schlepper 12) befestigten Referenzsensor 35 darstellt. Der Schlepper 12 umfasst ferner eine im Bereich einer Kabine 37 angeordnete elektronische Steuereinheit 38, die mit einem Eingabemodul 40 verbunden ist. Die Positionsbestimmung der Hubvorrichtung 114 bzw. des Anbaugeräts 130 erfolgt durch die vorhandene Sensorik entsprechend der obigen Beschreibung in Bezug auf Figur 2, wobei die Komponenten mit den Bezugszeichen 14 und 30 entsprechend dem Ausführungsbeispiel zu Figur 3 durch die Komponenten mit den Bezugszeichen 114 und 130 zu ersetzen sind. Andere Komponenten, wie z.B. die Werkzeugaufnahme 26, entfallen dabei.

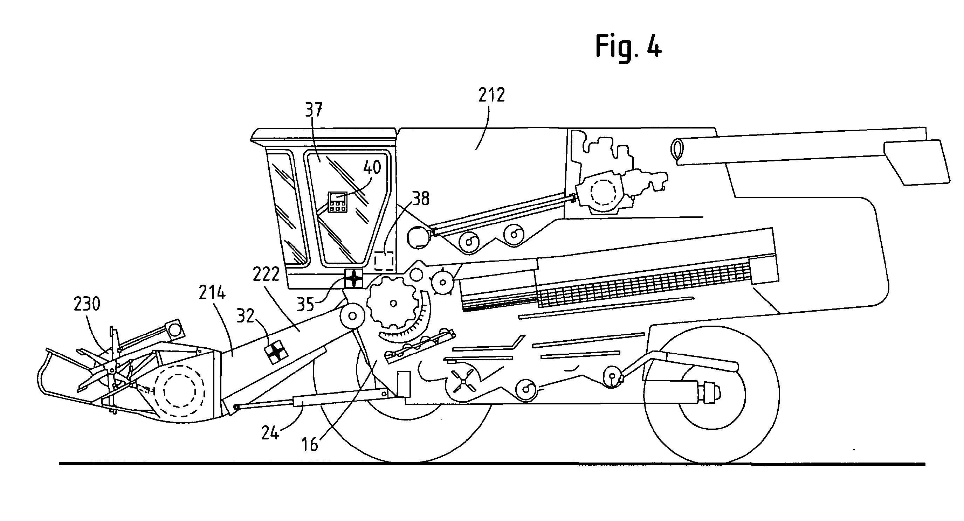

In Figur 4 ist ein weiteres Ausführungsbeispiel dargestellt. Sie zeigt eine landwirtschaftliche Maschine 10 mit einem Fahrzeug in Form einer Erntemaschine 212 in Kombination mit einer Hubvorrichtung in Form eines Anbaugestänges 214. Das Anbaugestänge 214 ist frontseitig der Erntemaschine 212 mit einem Rahmen 16 der Erntemaschine 212 verbunden. Das Anbaugestänge 214 weist Lenker 222 auf, die über Hydraulikzylinder 24 verschwenkbar an den Rahmen 16 angelenkt sind. Am vorderen Ende der Lenker 222 ist ein Anbaugerät in Form eines Erntevorsatzes 230 angeordnet. Das Anbaugestänge 214 ist im Bereich der Lenker 222 mit einem ersten Beschleunigungssensor 32 versehen. Ein zweiter Beschleunigungssensor 34 ist hierbei nicht vorgesehen, da der Erntevorsatz 230 nicht verschwenkbar an das Anbaugestänge 214 gekoppelt ist und somit auch nicht über einen Hydraulikzylinder 28 gemäß Figur 3 betätigbar ist. Ferner ist die Erntemaschine 212 mit einem Beschleunigungssensor versehen, der einen im Bereich des Rahmens 16 (oder an einer beliebigen anderen Stelle an der Erntemaschine 212) befestigten Referenzsensor 35 darstellt (gegebenenfalls kann wie, in Figur 1 und 2 dargestellt, ein weiterer Referenzsensor 36 im Bereich des Rahmens 16 in Form eines Gyrostaten oder Drehratensensors vorgesehen sein (in den Figuren 3 bis 7 nicht dargestellt)). Die Erntemaschine 212 umfasst ferner eine im Bereich einer Kabine 37 angeordnete elektronische Steuereinheit 38, die mit einem Eingabemodul 40 verbunden ist. Die Positionsbestimmung des Anbaugestänges 214 bzw. des Anbaugeräts 230 erfolgt durch die vorhandene Sensorik entsprechend der obigen Beschreibung in Bezug auf Figur 2, wobei die Komponenten mit den Bezugszeichen 12, 14 und 30 entsprechend dem Ausführungsbeispiel zu Figur 4 durch die Komponenten mit den Bezugszeichen 212, 214 und 230 zu ersetzen sind. Andere Komponenten aus Figur 3, wie z.B. die Werkzeugaufnahme 26, der Hydraulikzylinder 28, das Hydraulikventil 48, die dazugehörigen hydraulischen Verbindungsleitungen 58, sowie die dazugehörigen elektronischen Sensor- und Steuerleitungen 42, 45 entfallen mangels Vorhandensein in Bezug auf das Ausführungsbeispiel zu Figur 4.

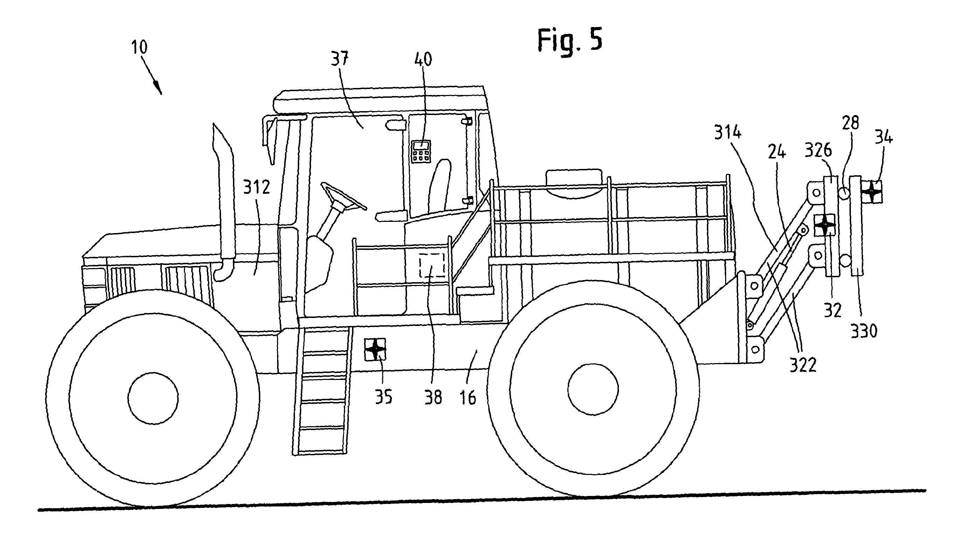

In Figur 5 ist ein weiteres Ausführungsbeispiel dargestellt. Sie zeigt eine landwirtschaftliche Maschine 10 mit einem Fahrzeug in Form einer selbstfahrenden Feldspritze 312 in Kombination mit einer Hubvorrichtung in Form eines Parallelogrammgestänges 314. Das Parallelogrammgestänge 314 ist heckseitig der Feldspritze 312 mit einem Rahmen 16 der Feldspritze 212 verbunden. Das Parallelogrammgestänge 314 weist Lenker 322 auf, die über Hydraulikzylinder 24 verschwenkbar an den Rahmen 16 angelenkt sind. Am hinteren Ende der Lenker 322 ist eine Geräteaufnahme 326 vorgesehen. An der Geräteaufnahme 326 ist ein Anbaugerät in Form eines Spritzengestänges 330 angeordnet, das über einen weiteren Hydraulikzylinder 28 um eine Längsachse der Maschine 10 verschwenkbar an die Geräteaufnahme 326 angelenkt ist. Das Parallelogrammgestänge 314 ist im Bereich der Lenker 322 mit einem ersten Beschleunigungssensor 32 versehen. Im Bereich des Spritzengestänges 330 ist ein weiterer Beschleunigungssensor 34 vorgesehen. Ferner ist die Feldspritze 312 mit einem Beschleunigungssensor versehen, der einen im Bereich des Rahmens 16 (oder an einer beliebigen anderen Stelle an der Feldspritze 312) befestigten Referenzsensor 35 darstellt (gegebenenfalls kann wie, in Figur 1 und 2 dargestellt, ein weiterer Referenzsensor 36 im Bereich des Rahmens 16 in Form eines Gyrostaten oder Drehratensensors vorgesehen sein (in den Figuren 3 bis 7 nicht dargestellt)). Die Feldspritze 312 umfasst ferner eine im Bereich einer Kabine 37 angeordnete elektronische Steuereinheit 38, die mit einem Eingabemodul 40 verbunden ist. Die Positionsbestimmung des Parallelogrammgestänges 314 bzw. des Spritzengestänges 330 erfolgt durch die vorhandene Sensorik entsprechend der obigen Beschreibung in Bezug auf Figur 2, wobei die Komponenten mit den Bezugszeichen 12, 14, 26 und 30 entsprechend dem Ausführungsbeispiel zu Figur 5 durch die Komponenten mit den Bezugszeichen 312, 314, 326 und 330 zu ersetzen sind.

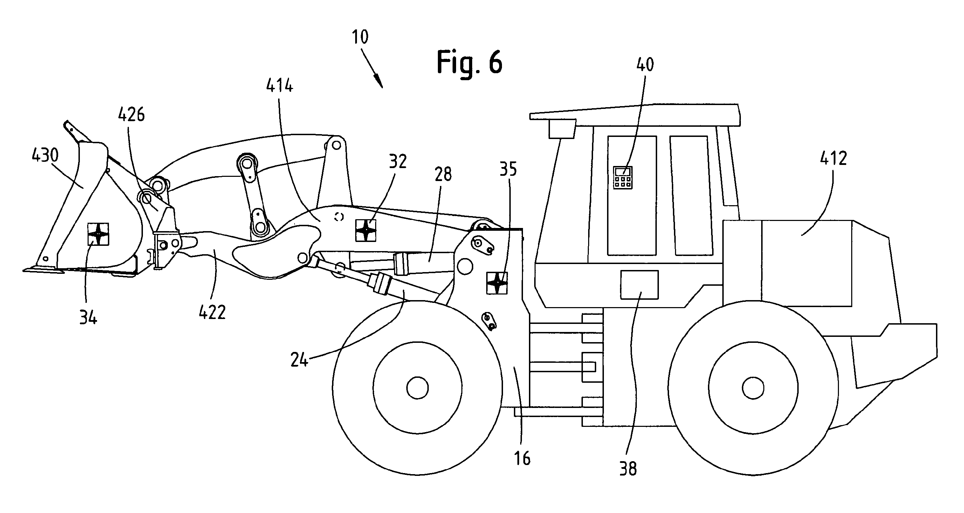

In Figur 6 ist ein weiteres Ausführungsbeispiel dargestellt. Sie zeigt eine landwirtschaftliche Maschine 10 mit einem Fahrzeug in Form eines Radladerfahrzeugs 412 in Kombination mit einer Hubvorrichtung in Form einer Ladevorrichtung 414. Die Ladevorrichtung 414 ist frontseitig des Radladerfahrzeugs 412 mit einem Rahmen 16 des Radladerfahrzeugs 412 verbunden. Die Ladevorrichtung 414 weist eine Schwinge 422 auf, die über Hydraulikzylinder 24 verschwenkbar an den Rahmen 16 angelenkt ist. Am vorderen Ende der Schwinge 422 ist eine Geräte- bzw. Werkzeugaufnahme 426 vorgesehen, an die ein Anbaugerät in Form einer Laderschaufel 430 gekoppelt ist, wobei die Werkzeugaufnahme 426 über einen weiteren Hydraulikzylinder 28 verschwenkbar angelenkt ist. Die Ladevorrichtung 414 ist im Bereich der Schwinge 422 mit einem ersten Beschleunigungssensor 32 versehen. Im Bereich der Laderschaufel 430 ist ein weiterer Beschleunigungssensor 34 vorgesehen. Ferner ist das Radladerfahrzeug 412 mit einem Beschleunigungssensor versehen, der einen im Bereich des Rahmens 16 (oder an einer beliebigen anderen Stelle am Radladerfahrzeug 412) befestigten Referenzsensor 35 darstellt (gegebenenfalls kann wie, in Figur 1 und 2 dargestellt, ein weiterer Referenzsensor 36 im Bereich des Rahmens 16 in Form eines Gyrostaten oder Drehratensensors vorgesehen sein (in den Figuren 3 bis 7 nicht dargestellt)). Das Radladerfahrzeug 412 umfasst ferner eine im Bereich einer Kabine 37 angeordnete elektronische Steuereinheit 38, die mit einem Eingabemodul 40 verbunden ist. Die Positionsbestimmung der Ladevorrichtung 414 bzw. der Laderschaufel 430 erfolgt durch die vorhandene Sensorik entsprechend der obigen Beschreibung in Bezug auf Figur 2, wobei die Komponenten mit den Bezugszeichen 12, 14, 26 und 30 entsprechend dem Ausführungsbeispiel zu Figur 6 durch die Komponenten mit den Bezugszeichen 412, 414, 426 und 430 zu ersetzen sind.

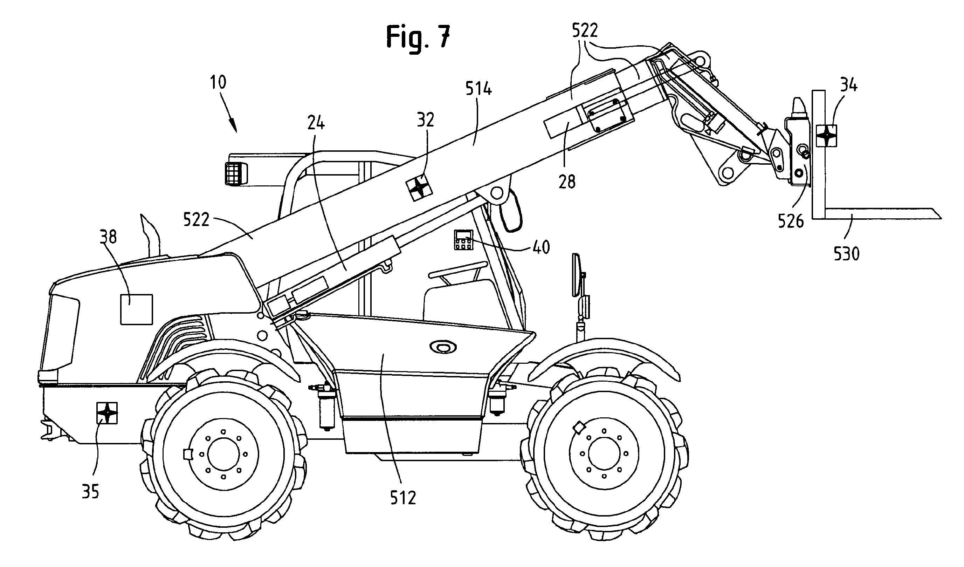

In Figur 7 ist ein weiteres Ausführungsbeispiel dargestellt. Sie zeigt eine landwirtschaftliche Maschine 10 mit einem Fahrzeug in Form eines Teleskopladerfahrzeugs 512 in Kombination mit einer Hubvorrichtung in Form eines Teleskopauslegers 514. Der Teleskopausleger 514 ist mit einem Rahmen 16 des Teleskopladerfahrzeugs 512 verbunden. Der Teleskopausleger 514 umfasst mehrere teleskopierbar ineinander geführte Auslegerelemente 522 und ist über einen Hydraulikzylinder 24 verschwenkbar an den Rahmen 16 angelenkt. Am vorderen Ende des Teleskopauslegers 514 ist eine Geräte- bzw. Werkzeugaufnahme 526 vorgesehen, an die ein Anbaugerät in Form einer Gabel 530 gekoppelt ist, wobei die Werkzeugaufnahme 526 über einen weiteren Hydraulikzylinder 28 verschwenkbar angelenkt ist. Der Teleskopausleger 514 ist im Bereich der Auslegerelemente 522 mit einem ersten Beschleunigungssensor 32 versehen. Im Bereich der Gabel 530 ist ein weiterer Beschleunigungssensor 34 vorgesehen. Ferner ist das Teleskopladerfahrzeug 512 mit einem Beschleunigungssensor versehen, der einen im Bereich des Rahmens 16 (oder an einer beliebigen anderen Stelle am Teleskopladerfahrzeug 512) befestigten Referenzsensor 35 darstellt (gegebenenfalls kann wie, in Figur 1 und 2 dargestellt, ein weiterer Referenzsensor 36 im Bereich des Rahmens 16 in Form eines Gyrostaten oder Drehratensensors vorgesehen sein (in den Figuren 3 bis 7 nicht dargestellt)). Das Teleskopladerfahrzeug 512 umfasst ferner eine im Bereich einer Kabine 37 angeordnete elektronische Steuereinheit 38, die mit einem Eingabemodul 40 verbunden ist. Die Positionsbestimmung des Teleskopauslegers 514 bzw. der Gabel 530 erfolgt durch die vorhandene Sensorik entsprechend der obigen Beschreibung in Bezug auf Figur 2, wobei die Komponenten mit den Bezugszeichen 12, 14, 26 und 30 entsprechend dem Ausführungsbeispiel zu Figur 7 durch die Komponenten mit den Bezugszeichen 512, 514, 526 und 530 zu ersetzen sind.

Auch wenn die Erfindung lediglich anhand einiger Ausführungsbeispiele beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung, wie in den Ansprüchen definiert, fallen.

## Patentansprüche

1. Landwirtschaftliche Maschine (10), umfassend ein Fahrzeug (12, 112, 212, 312, 412, 512), eine mit dem Fahrzeug (12, 212, 312, 412, 512) verbindbare und motorisch betätigbare Hubvorrichtung (14, 114, 214, 314, 414, 514), an welche ein zu bewegendes Anbaugerät (30, 130, 230, 330, 430, 530) koppelbar ist, und eine Einrichtung zur Bestimmung der Position der an das Fahrzeug gekoppelten Hubvorrichtung (14, 114, 214, 314, 414, 514) und/oder des an die Hubvorrichtung (14, 114, 214, 314, 414, 514) gekoppelten Anbaugerätes (30, 130, 230, 330, 430, 530), wobei die Einrichtung eine elektronische Steuereinheit (38) umfasst, welche mit Sensoren zur Positionsbestimmung der Hubvorrichtung (14, 114, 214, 314, 414, 514) und/oder des Anbaugerätes (30, 130, 230, 330, 430, 530) verbunden ist, wobei die Sensoren als Beschleunigungssensoren (32, 34, 35) ausgebildet sind, wobei wenigstens ein erster Beschleunigungssensor (32, 34) an der Hubvorrichtung (14, 114, 214, 314, 414, 514) und/oder am Anbaugerät (30, 130, 230, 330, 430, 530) und wenigstens ein als Beschleunigungssensor ausgebildeter Referenzsensor (35) am Fahrzeug (12, 212, 312, 412, 512) positioniert ist und wobei von der elektronischen Steuereinheit (38) ein Positionssignal für die Hubvorrichtung (14, 114, 214, 314, 414, 514) und/oder für das Anbaugerät (30, 130, 230, 330, 430, 530) durch eine Relativmessung der Signale des wenigstens ersten Beschleunigungssensors (32, 34) zu den Signalen des Referenzsensors (35) generierbar ist, **dadurch gekennzeichnet, dass** der Steuereinheit (38) ein vom Referenzsensor (35) gelieferter Referenzbeschleunigungsvektor und ein vom wenigstens ersten Beschleunigungssensor (32, 34) gelieferter Positionsbeschleunigungsvektor zuführbar sind und zur Bestimmung des Positionssignals in Relation gesetzt werden.

2. Landwirtschaftliche Maschine (10) nach Anspruch 1, **dadurch gekennzeichnet, dass** zur Verbesserung der Referenzmessung zusätzlich ein Referenzsensor (36) in Form eines Gyroskops oder Drehratensensors vorgesehen ist, der auf dem Fahrzeug (12, 212, 312, 412, 512) positioniert ist, um die Referenzmessung zu verbessern bzw. um eine Fehlerkorrektur vorzunehmen.

3. Landwirtschaftliche Maschine (10) nach einem der Ansprüche 1 oder 2, **dadurch gekennzeichnet, dass** ein zweiter Beschleunigungssensor (32, 34) an der Hubvorrichtung (14, 114, 214, 314, 414, 514) und/oder am Anbaugerät (30, 130, 230, 330, 430, 530) positioniert ist.

4. Landwirtschaftliche Maschine (10) nach einem der Ansprüche 1 bis 3, **dadurch gekennzeichnet, dass** die Hubvorrichtung (14, 114, 214, 314, 414, 514) als Frontlader (14) und das Anbaugerät (30, 130, 230, 330, 430, 530) als Frontladerwerkzeug (30) ausgebildet ist.

5. Landwirtschaftliche Maschine (10) nach einem der Ansprüche 1 bis 4, **dadurch gekennzeichnet, dass** die Hubvorrichtung (14, 114, 214, 314, 414, 514) als Anhängevorrichtung (114), insbesondere Dreipunktanhängevorrichtung, und das Anbaugerät (30, 130, 230, 330, 430, 530) als an die Anhängevorrichtung koppelbares Anhängegerät (130) ausgebildet ist.

6. Landwirtschaftliche Maschine (10) nach einem der Ansprüche 1 bis 4, **dadurch gekennzeichnet, dass** die Hubvorrichtung (14, 114, 214, 314, 414, 514) als Anbaugestänge (214) für einen Erntevorsatz (230) und das Anbaugerät (30, 130, 230, 330, 430, 530) als Erntevorsatz (230) ausgebildet ist.

7. Landwirtschaftliche Maschine (10) nach einem der Ansprüche 1 bis 8, **dadurch gekennzeichnet, dass** das Fahrzeug (12, 212, 312, 412, 512) als landwirtschaftlicher Schlepper (12) ausgebildet ist.

8. Landwirtschaftliche Maschine (10) nach einem der Ansprüche 1 bis 4 oder 6, **dadurch gekennzeichnet, dass** das Fahrzeug (12, 212, 312, 412, 512) als selbstfahrende Erntemaschine (212) ausgebildet ist.

9. Landwirtschaftliche Maschine (10) nach einem der Ansprüche 1 bis 4, **dadurch gekennzeichnet, dass** das Fahrzeug (12, 212, 312, 412, 512) als landwirtschaftliche Feldspritze (312) ausgebildet ist, wobei die Hubvorrichtung (14, 114, 214, 314, 414, 514) als Parallelogrammgestänge (314) und das Anbaugerät (30, 130, 230, 330, 430, 530) als Spritzgestänge (330) ausgebildet ist.

10. Landwirtschaftliche Maschine (10) nach einem der Ansprüche 1 bis 4, **dadurch gekennzeichnet, dass** das Fahrzeug (12, 212, 312, 412, 512) als Baumaschine (412), insbesondere als Radladerfahrzeug ausgebildet ist, wobei die Hubvorrichtung (14, 114, 214, 314, 414, 514) als Ladevorrichtung (414) und das Anbaugerät (30, 130, 230, 330, 430, 530) als Schaufel (430) ausgebildet ist.

11. Landwirtschaftliche Maschine (10) nach einem der Ansprüche 1 bis 4, **dadurch gekennzeichnet, dass** das Fahrzeug (12, 212, 312, 412, 512) als Teleskopladerfahrzeug (512) ausgebildet ist, wobei die Hubvorrichtung (14, 114, 214, 314, 414, 514) als Teleskopausleger (514) ausgebildet ist, an den ein Anbaugerät (530) über eine Werkzeugaufnahme (526) koppelbar ist.

12. Verfahren zur Positionsbestimmung einer an ein landwirtschaftliches Fahrzeug (12, 212, 312, 412, 512) koppelbaren Hubvorrichtung (14, 114, 214, 314, 414, 514) und/oder eines an die Hubvorrichtung (14, 114, 214, 314, 414, 514) koppelbaren Anbaugerätes (30, 130, 230, 330, 430, 530), wobei an dem Fahrzeug (12, 212, 312, 412, 512) ein als Beschleunigungssensor ausgebildeter Referenzsensor (35) und an der Hubvorrichtung (14, 114, 214, 314, 414, 514) und/oder an dem Anbaugerät (30, 130, 230, 330, 430, 530) wenigstens ein Beschleunigungssensor (32, 34) positioniert wird und von einer elektronischen Steuereinheit (38) ein Positionssignal für die Hubvorrichtung (14, 114, 214, 314, 414, 514) und/oder für das Anbaugerät (30, 130, 230, 330, 430, 530) durch eine Relativmessung der Signale des wenigstens ersten Beschleunigungssensors (32, 34) zu den Signalen des Referenzsensors (35) generiert wird, **dadurch gekennzeichnet, dass** der Steuereinheit (38) ein vom Referenzsensor (35) gelieferter Referenzbeschleunigungsvektor und ein vom wenigstens ersten Beschleunigungssensor (32, 34) gelieferter Positionsbeschleunigungsvektor zugeführt und zur Bestimmung des Positionssignals in Relation gesetzt werden.

13. Verfahren nach Anspruch 12, **dadurch gekennzeichnet, dass** zusätzlich ein Referenzsensor (36) in Form eines Gyroskops oder Drehratensensors vorgesehen ist, der auf dem Fahrzeug (12, 212, 312, 412, 512) positioniert ist, mit dem bei der Generierung des Positionssignals eine Fehlerkorrekturmessung durchgeführt wird.

14. Verfahren nach einem der Ansprüche 12 oder 13, **dadurch gekennzeichnet, dass** ein zweiter Beschleunigungssensor (32, 34) an der Hubvorrichtung (14, 114, 214, 314, 414, 514) und/oder am Anbaugerät (30, 130, 230, 330, 430, 530) positioniert wird.

15. Verfahren nach einem der Ansprüche 12 bis 14, **dadurch gekennzeichnet, dass** eine Position der Hubvorrichtung (14, 114, 214, 314, 414, 514) in Abhängigkeit von dem Positionssignal und in Abhängigkeit von einer vorgebbaren Position für die Hubvorrichtung (14, 114, 214, 314, 414, 514) von der elektronischen Steuereinheit (38) angesteuert wird.

16. Verfahren nach einem der Ansprüche 12 bis 15, **dadurch gekennzeichnet, dass** eine Position des Anbaugeräts (30, 130, 230, 330, 430, 530) in Abhängigkeit von dem Positionssignal und in Abhängigkeit von einer vorgebbaren Position für das Anbaugerät (30, 130, 230, 330, 430, 530), insbesondere einer zur Bodenoberfläche horizontalen Position, von der elektronischen Steuereinheit (38) angesteuert wird.

## Claims

1. Agricultural machine (10) comprising a vehicle (12, 112, 212, 312, 412, 512), a lifting apparatus (14, 114, 214, 314, 414, 514) which can be coupled to the vehicle (12, 212, 312, 412, 512) and can be activated by motor and to which an implement (30, 130, 230, 330, 430, 530) which is to be moved can be coupled, and a device for determining the position of the lifting apparatus (14, 114, 214, 314, 414, 514) which is coupled to the vehicle and/or of the implement (30, 130, 230, 330, 430, 530) which is coupled to the lifting apparatus (14, 114, 214, 314, 414, 514), wherein the device comprises an electronic control unit (38) which is connected to sensors for determining the position of the lifting apparatus (14, 114, 214, 314, 414, 514) and/or of the implement (30, 130, 230, 330, 430, 530), wherein the sensors are embodied as acceleration sensors (32, 34, 35), wherein at least a first acceleration sensor (32, 34) is positioned on the lifting apparatus (14, 114, 214, 314, 414, 514) and/or on the implement (30, 130, 230, 330, 430, 530), and at least one reference sensor (35) which is embodied as an acceleration sensor is positioned on the vehicle (12, 212, 312, 412, 512), and wherein a position signal for the lifting apparatus (14, 114, 214, 314, 414, 514) and/or for the implement (30, 130, 230, 330, 430, 530) can be generated by the electronic control unit (38) by means of a relative measurement of the signals of the at least first acceleration sensor (32, 34) with respect to the signals of the reference sensor (35), **characterized in that** a reference acceleration vector which is supplied by the reference sensor (35) and a position acceleration vector which is supplied by the at least first acceleration sensor (32, 34) can be fed to the control unit (38) and are placed in relationship with one another in order to determine the position signal.

2. Agricultural machine (10) according to Claim 1, **characterized in that**, in order to improve the reference measurement, a reference sensor (36) in the form of a gyroscope or rotational speed sensor is additionally provided, which reference sensor (36) is positioned on the vehicle (12, 212, 312, 412, 512) in order to improve the reference measurement and/or n order to perform error correction.

3. Agricultural machine (10) according to either of Claims 1 or 2, **characterized in that** a second acceleration sensor (32, 34) is positioned on the lifting apparatus (14, 114, 214, 314, 414, 514) and/or on the implement (30, 130, 230, 330, 430, 530).

4. Agricultural machine (10) according to one of Claims 1 to 3, **characterized in that** the lifting apparatus (14, 114, 214, 314, 414, 514) is embodied as a front loader (14) and the implement (30, 130, 230, 330, 430, 530) is embodied as a front loader tool (30).

5. Agricultural machine (10) according to one of Claims 1 to 4, **characterized in that** the lifting apparatus (14, 114, 214, 314, 414, 514) is embodied as a trailer apparatus (114), in particular as a three-point trailer apparatus, and the implement (30, 130, 230, 330, 430, 530) is embodied as a trailer unit (130) which can be coupled to the trailer apparatus.

6. Agricultural machine (10) according to one of Claims 1 to 4, **characterized in that** the lifting apparatus (14, 114, 214, 314, 414, 514) is embodied as an implement linkage (214) for a combined header (230), and the implement (30, 130, 230, 330, 430, 530) is embodied as a combined header (230).

7. Agricultural machine (10) according to one of Claims 1 to 6, **characterized in that** the vehicle (12, 212, 312, 412, 512) is embodied as an agricultural tractor (12).

8. Agricultural machine (10) according to one of Claims 1 to 4 or 6, **characterized in that** the vehicle (12, 212, 312, 412, 512) is embodied as a self-propelling harvesting machine (212).

9. Agricultural machine (10) according to one of Claims 1 to 4, **characterized in that** the vehicle (12, 212, 312, 412, 512) is embodied as an agricultural field sprayer (312), wherein the lifting apparatus (14, 114, 214, 314, 414, 514) is embodied as a parallelogram linkage (314), and the implement (30, 130, 230, 330, 430, 530) is embodied as a sprayer linkage (330).

10. Agricultural machine (10) according to one of Claims 1 to 4, **characterized in that** the vehicle (12, 212, 312, 412, 512) is embodied as a construction machine (412), in particular as a wheel loader vehicle, wherein the lifting apparatus (14, 114, 214, 314, 414, 514) is embodied as a loading apparatus (414), and the implement (30, 130, 230, 330, 430, 530) is embodied as a shovel (430).

11. Agricultural machine (10) according to one of Claims 1 to 4, **characterized in that** the vehicle (12, 212, 312, 412, 512) is embodied as a telescopic loader vehicle (512), wherein the lifting apparatus (14, 114, 214, 314, 414, 514) is embodied as a telescopic extension arm (514) to which an implement (530) can be coupled via a tool receptacle (526).

12. Method for determining the position of a lifting apparatus (14, 114, 214, 314, 414, 514) which can be coupled to an agricultural vehicle (12, 212, 312, 412, 512) and/or of an implement (30, 130, 230, 330, 430, 530) which can be coupled to the lifting apparatus (14, 114, 214, 314, 414, 514), wherein a reference sensor (35) which is embodied as an acceleration sensor is positioned on the vehicle (12, 212, 312, 412, 512), and at least one acceleration sensor (32, 34) is positioned on the lifting apparatus (14, 114, 214, 314, 414, 514) and/or on the implement (30, 130, 230, 330, 430, 530), and a position signal for the lifting apparatus (14, 114, 214, 314, 414, 514) and/or for the implement (30, 130, 230, 330, 430, 530) is generated by an electronic control unit (38) by means of a relative measurement of the signals of the at least first acceleration sensor (32, 34) with respect to the signals of the reference sensor (35), **characterized in that** a reference acceleration vector which is supplied by the reference sensor (35) and a position acceleration vector which is supplied by the at least first acceleration sensor (32, 34) can be fed to the control unit (38) and are placed in relationship with one another in order to determine the position signal.

13. Method according to Claim 12, **characterized in that** a reference sensor (36) in the form of a gyroscope or rotational speed sensor is additionally provided, which reference sensor (36) is positioned on the vehicle (12, 212, 312, 412, 512) and is used to carry out an error correction measurement during the generation of the position signal.

14. Method according to either of Claims 12 or 13, **characterized in that** a second acceleration sensor (32, 34) is positioned on the lifting apparatus (14, 114, 214, 314, 414, 514) and/or on the implement (30, 130, 230, 330, 430, 530).

15. Method according to one of Claims 12 to 14, **characterized in that** the lifting apparatus (14, 114, 214, 314, 414, 514) is moved into a position by the electronic control unit (38) as a function of the position signal and as a function of a predefinable position for the lifting apparatus (14, 114, 214, 314, 414, 514).

16. Method according to one of Claims 12 to 15, **characterized in that** the implement (30, 130, 230, 330, 430, 530) is moved into a position by the electronic control unit (38) as a function of the position signal and as a function of a predefinable position for the implement (30, 130, 230, 330, 430, 530), in particular a position which is horizontal with respect to the ground surface.

## Revendications

1. Machine agricole (10) comprenant un véhicule (12, 112, 212, 312, 412, 512), un dispositif de levage (14, 114, 214, 314, 414, 514) pouvant être relié avec le véhicule (12, 212, 312, 412, 512) et à actionnement motorisé, auquel peut être accouplé un appareil rapporté (30, 130, 230, 330, 430, 530) à actionner, et un dispositif pour déterminer la position du dispositif de levage (14, 114, 214, 314, 414, 514) accouplé au véhicule et/ou de l'appareil rapporté (30, 130, 230, 330, 430, 530) accouplé au dispositif de levage (14, 114, 214, 314, 414, 514), le dispositif comprenant un module de commande électronique (38) qui est relié avec des capteurs pour déterminer la position du dispositif de levage (14, 114, 214, 314, 414, 514) et/ou de l'appareil rapporté (30, 130, 230, 330, 430, 530), les capteurs étant réalisés sous la forme de capteurs d'accélération (32, 34, 35), au moins un premier capteur d'accélération (32, 34) étant positionné sur le dispositif de levage (14, 114, 214, 314, 414, 514) et/ou l'appareil rapporté (30, 130, 230, 330, 430, 530) et au moins un capteur de référence (35) réalisé sous la forme d'un capteur d'accélération étant positionné sur le véhicule (12, 212, 312, 412, 512) et un signal de position pour le dispositif de levage (14, 114, 214, 314, 414, 514) et/ou l'appareil rapporté (30, 130, 230, 330, 430, 530) pouvant être généré par le module de commande électronique (38) par une mesure relative des signaux de l'au moins un premier capteur d'accélération (32, 34) par rapport aux signaux du capteur de référence (35), **caractérisée en ce qu'**un vecteur d'accélération de référence délivré par le capteur de référence (35) et un vecteur d'accélération de position délivré par l'au moins un premier capteur d'accélération (32, 34) peuvent être acheminés au module de commande (38) et sont mis en relation en vue de déterminer le signal de position.

2. Machine agricole (10) selon la revendication 1, **caractérisée en ce que** pour améliorer la mesure de référence, il est prévu en plus un capteur de référence (36) sous la forme d'un gyroscope ou d'un capteur de vitesse de rotation, lequel est positionné sur le véhicule (12, 212, 312, 412, 512) afin d'améliorer la mesure de référence ou d'effectuer une correction d'erreur.

3. Machine agricole (10) selon l'une des revendications 1 ou 2, **caractérisée en ce qu'**un deuxième capteur d'accélération (32, 34) est positionné sur le dispositif de levage (14, 114, 214, 314, 414, 514) et/ou sur l'appareil rapporté (30, 130, 230, 330, 430, 530).

4. Machine agricole (10) selon l'une des revendications 1 à 3, **caractérisée en ce que** le dispositif de levage (14, 114, 214, 314, 414, 514) est réalisé sous la forme d'un chargeur frontal (14) et l'appareil rapporté (30, 130, 230, 330, 430, 530) sous la forme d'un outil pour chargeur frontal (30).

5. Machine agricole (10) selon l'une des revendications 1 à 4, **caractérisée en ce que** le dispositif de levage (14, 114, 214, 314, 414, 514) est réalisé sous la forme d'un dispositif d'attelage (114), notamment un dispositif d'attelage à trois points, et l'appareil rapporté (30, 130, 230, 330, 430, 530) sous la forme d'un outil accroché (130) qui peut être accouplé au dispositif d'attelage.

6. Machine agricole (10) selon l'une des revendications 1 à 4, **caractérisée en ce que** le dispositif de levage (14, 114, 214, 314, 414, 514) est réalisé sous la forme d'une barre rapportée (214) pour un adaptateur de moissonnage (230) et l'appareil rapporté (30, 130, 230, 330, 430, 530) sous la forme d'un adaptateur de moissonnage (230).

7. Machine agricole (10) selon l'une des revendications 1 à 6, **caractérisée en ce que** le véhicule (12, 212, 312, 412, 512) est réalisé sous la forme d'un tracteur agricole (12).

8. Machine agricole (10) selon l'une des revendications 1 à 4 ou 6, **caractérisée en ce que** le véhicule (12, 212, 312, 412, 512) est réalisé sous la forme d'une moissonneuse automotrice (212).

9. Machine agricole (10) selon l'une des revendications 1 à 4, **caractérisée en ce que** le véhicule (12, 212, 312, 412, 512) est réalisé sous la forme d'un pulvérisateur à cultures agricole (312), le dispositif de levage (14, 114, 214, 314, 414, 514) étant réalisé sous la forme d'une barre en parallélogramme (314) et l'appareil rapporté (30, 130, 230, 330, 430, 530) sous la forme d'une rampe de pulvérisation (330).

10. Machine agricole (10) selon l'une des revendications 1 à 4, **caractérisée en ce que** le véhicule (12, 212, 312, 412, 512) est réalisé sous la forme d'un engin de construction (412), notamment sous la forme d'un chargeur sur roues, le dispositif de levage (14, 114, 214, 314, 414, 514) étant réalisé sous la forme d'un dispositif de chargement (414) et l'appareil rapporté (30, 130, 230, 330, 430, 530) sous la forme d'un godet (430).

11. Machine agricole (10) selon l'une des revendications 1 à 4, **caractérisée en ce que** le véhicule (12, 212, 312, 412, 512) est réalisé sous la forme d'un chargeur télescopique (512), le dispositif de levage (14, 114, 214, 314, 414, 514) étant réalisé sous la forme d'une flèche télescopique (514) à laquelle peut être accouplé un appareil rapporté (530) par le biais d'un attachement d'outil (526).

12. Procédé pour déterminer la position d'un dispositif de levage (14, 114, 214, 314, 414, 514) qui peut être accouplé à un véhicule agricole (12, 212, 312, 412, 512) et/ou d'un appareil rapporté (30, 130, 230, 330, 430, 530) qui peut être accouplé au dispositif de levage (14, 114, 214, 314, 414, 514), un capteur de référence (35) réalisé sous la forme d'un capteur d'accélération étant positionné sur le véhicule (12, 212, 312, 412, 512) et au moins un capteur d'accélération (32, 34) sur le dispositif de levage (14, 114, 214, 314, 414, 514) et/ou sur l'appareil rapporté (30, 130, 230, 330, 430, 530) et un signal de position pour le dispositif de levage (14, 114, 214, 314, 414, 514) et/ou pour l'appareil rapporté (30, 130, 230, 330, 430, 530) étant généré par un module de commande électronique (38) par une mesure relative des signaux de l'au moins un premier capteur d'accélération (32, 34) par rapport aux signaux du capteur de référence (35), **caractérisé en ce qu'**un vecteur d'accélération de référence délivré par le capteur de référence (35) et un vecteur d'accélération de position délivré par l'au moins un premier capteur d'accélération (32, 34) sont acheminés au module de commande (38) et sont mis en relation en vue de déterminer le signal de position.

13. Procédé selon la revendication 12, **caractérisé en ce qu'**il est en plus prévu un capteur de référence (36) sous la forme d'un gyroscope ou d'un capteur de vitesse de rotation, lequel est positionné sur le véhicule (12, 212, 312, 412, 512) et avec lequel est effectuée une mesure de correction d'erreur lors de la génération du signal de position.

14. Procédé selon l'une des revendications 12 ou 13, **caractérisé en ce qu'**un deuxième capteur d'accélération (32, 34) est positionné sur le dispositif de levage (14, 114, 214, 314, 414, 514) et/ou sur l'appareil rapporté (30, 130, 230, 330, 430, 530).

15. Procédé selon l'une des revendications 12 à 14, **caractérisé en ce qu'**une position du dispositif de levage (14, 114, 214, 314, 414, 514) est commandée par le module de commande électronique (38) en fonction du signal de position et en fonction d'une position pouvant être prédéfinie pour le dispositif de levage (14, 114, 214, 314, 414, 514).

16. Procédé selon l'une des revendications 12 à 15, **caractérisé en ce qu'**une position de l'appareil rapporté (30, 130, 230, 330, 430, 530) est commandée par le module de commande électronique (38) en fonction du signal de position et en fonction d'une position pouvant être prédéfinie pour l'appareil rapporté (30, 130, 230, 330, 430, 530), notamment une position horizontale par rapport à la surface du sol.
